# EUROPEAN PATENT APPLICATION

(11) **EP 4 358 249 A1**
(43) Date of publication of application: **24.04.2024**
(21) Application number: 23199817.0
(22) Date of filing: 26.09.2023
(51) Int. Cl.: H01M 50/209, H01M 50/296, H01M 50/503, H01M 50/583

(54) **BATTERY MODULE**

(30) Priority: 20.10.2022 JP 2022168094
(71) Applicant: Prime Planet Energy & Solutions, Inc., Chuo-ku Tokyo 103-0022 (JP)
(72) Inventor: KUGINO, Satoshi, Tokyo, 103-0022 (JP); ABE, Kosyo, Tokyo, 103-0022 (JP); TERANAKA, Tomochika, Tokyo, 103-0022 (JP)
(74) Representative: Kuhnen & Wacker Patent- und Rechtsanwaltsbüro PartG mbB

(57) **Abstract**

A terminal member (80) is electrically connected to at least one battery cell (100) of a plurality of battery cells (100), and includes a fuse portion (86). An arc interruption portion (63) is located in a discharging space (S) in which an arc generated at a time of melting and disconnection of the fuse portion (86) extends, and is provided to extend in a direction substantially orthogonal to a direction in which the fuse portion (86) and the discharging space (S) are arranged side by side.

## Description

### CROSS REFERENCE TO RELATED APPLICATIONS

This nonprovisional application is based on Japanese Patent Application No. 2022-168094 filed on October 20, 2022 with the Japan Patent Office, the entire contents of which are hereby incorporated by reference.

### BACKGROUND OF THE INVENTION

### Field of the Invention

The present technology relates to a battery module.

### Description of the Background Art

Japanese Patent Laying-Open No. 2022-58731 is a prior art document that discloses a configuration of a battery module. In the battery module described in Japanese Patent Laying-Open No. 2022-58731, when a fuse portion is melted, the molten metal of the fuse portion is dropped into a space provided below the fuse portion, thereby suppressing the molten metal from forming a new current path.

Japanese Patent Laying-Open No. 2022-36333 is a prior art document that discloses a configuration of a fuse. With the fuse described in Japanese Patent Laying-Open No. 2022-36333, a generated arc is elongated by a Lorentz force generated by current of the arc so as to extinguish the arc.

Japanese Patent Laying-Open No. 2022-36334 is a prior art document that discloses an arc extinguishing method using a fuse. In the arc extinguishing method using the fuse as described in Japanese Patent Laying-Open No. 2022-36334, a generated arc is elongated by a Lorentz force generated by a magnetic field of a magnet disposed in the vicinity of the fuse so as to extinguish the arc.

### SUMMARY OF THE INVENTION

In a battery module including the fuse described in each of Japanese Patent Laying-Open No. 2022-58731, Japanese Patent Laying-Open No. 2022-36333, and Japanese Patent Laying-Open No. 2022-36334, when an excessive amount of current flows in the battery module due to a short circuit or the like, an arc generated in the fuse may serve as an electric conduction path, thus presumably resulting in a long time of electric conduction of the excessive amount of current.

The present technology has been made to solve the above-described problem and has an object to provide a battery module to shorten a time of electric conduction of an excessive amount of current.

The present technology provides the following battery module.
[1] A battery module comprising:
   a plurality of battery cells arranged side by side in one direction, each of the plurality of battery cells having a prismatic shape;
   a terminal member electrically connected to at least one battery cell of the plurality of battery cells, the terminal member including a fuse portion; and
   an arc interruption portion located in a discharging space in which an arc generated at a time of melting and disconnection of the fuse portion extends, the arc interruption portion being provided to extend in a direction substantially orthogonal to a direction in which the fuse portion and the discharging space are arranged side by side.
[2] The battery module according to [1], further comprising a cover member that covers the fuse portion, wherein
   the cover member is provided with an opening that faces the discharging space.
[3] The battery module according to [2], further comprising a wall surface portion located between the fuse portion and the arc interruption portion, wherein
   the wall surface portion at least partially surrounds the discharging space when viewed in the direction in which the fuse portion and the discharging space are arranged side by side.
[4] The battery module according to [2] or [3], wherein the cover member includes a beam portion provided to extend across the opening, the beam portion constituting the arc interruption portion.
[5] The battery module according to any one of [1] to [3], further comprising a holder that supports the terminal member, wherein
   the holder includes a beam portion that constitutes the arc interruption portion.
[6] The battery module according to [4] or [5], wherein the beam portion extends in a direction in which an electric conduction path including the fuse portion in the terminal member extends.
[7] The battery module according to [4] or [5], wherein the beam portion extends in a direction substantially orthogonal to a direction in which an electric conduction path including the fuse portion in the terminal member extends.
[8] The battery module according to any one of [1] to [7], wherein the discharging space is formed on a side opposite to the plurality of battery cells with respect to the terminal member.
[9] The battery module according to [8], wherein the arc interruption portion is disposed at a position displaced with respect to a center of the fuse portion when viewed in the direction in which the fuse portion and the discharging space are arranged side by side.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery module according to a first embodiment of the present technology.
Fig. 2 is a perspective view showing an internal configuration of the battery module according to the first embodiment of the present technology.
Fig. 3 is a perspective view showing a configuration of a unit included in the battery module according to the first embodiment of the present technology.
Fig. 4 is a perspective view showing a configuration of a battery cell included in the battery module according to the first embodiment of the present technology.
Fig. 5 is a perspective view showing a configuration around a terminal member included in the battery module according to the first embodiment of the present technology.
Fig. 6 is a side view showing a Lorentz force applied around a fuse portion of the terminal member.
Fig. 7 is a top view showing a positional relation between the fuse portion and a beam portion.
Fig. 8 is a side view showing a state of an arc when the arc is generated in the fuse portion.
Fig. 9 is a side view showing a state in which the arc is interrupted by the beam portion.
Fig. 10 is a side view showing a configuration around a terminal member included in a battery module according to a second embodiment of the present technology.
Fig. 11 is a perspective view showing a configuration around a terminal member included in a battery module according to a third embodiment of the present technology.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

In the present specification, the term "battery cell" is not necessarily limited to a prismatic battery cell and may include a cell having another shape, such as a cylindrical battery cell.

Further, the "battery module" can be mounted on vehicles such as a hybrid electric vehicle (HEV), a plug-in hybrid electric vehicle (PHEV), and a battery electric vehicle (BEV). It should be noted that the use of the "battery module" is not limited to the use in a vehicle.

It should be noted that in each of the figures, an X direction is defined as a direction in which a positive electrode terminal and a negative electrode terminal of a battery cell are arranged side by side, a Y direction is defined as a direction in which a plurality of battery cells are stacked, and a Z direction is defined as a height direction of the battery module.

### (First Embodiment)

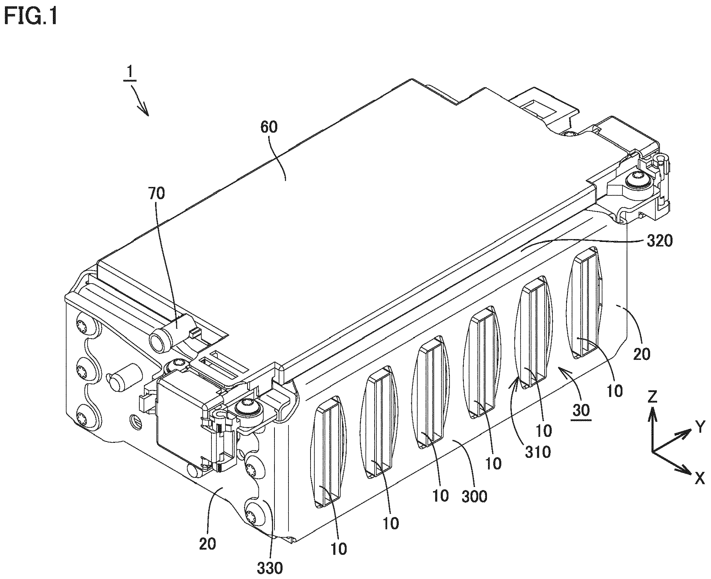

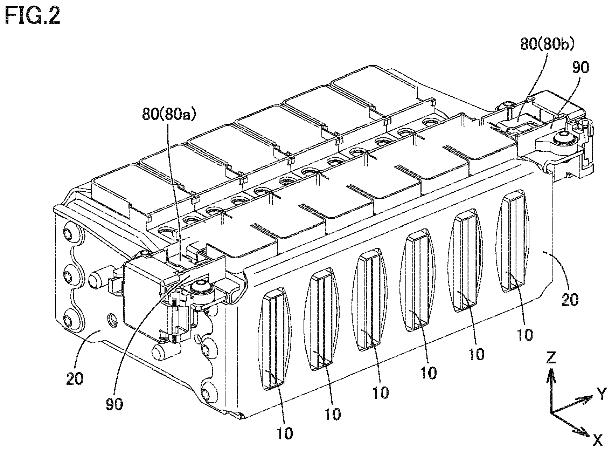

Fig. 1 is a perspective view showing a configuration of a battery module according to a first embodiment of the present technology. Fig. 2 is a perspective view showing an internal configuration of the battery module according to the first embodiment of the present technology.

First, an overall structure of battery module 1 will be described. As shown in Figs. 1 and 2, battery module 1 includes a plurality of units 10, end plates 20, restraint members 30, a cover member 60, a gas duct 70, terminal members 80, and holders 90.

The plurality of units 10 are arranged side by side in the Y direction. Six units 10 are arranged side by side in the Y direction as the plurality of units 10 according to the present embodiment. It should be noted that the number of the plurality of units 10 is not particularly limited as long as two or more units 10 are included.

The plurality of units 10 are sandwiched between two end plates 20. The plurality of units 10 according to the present embodiment are pressed by end plates 20 and restrained between two end plates 20.

End plates 20 are provided at the both ends beside the plurality of units 10 in the Y direction. Each of end plates 20 is fixed to a base such as a pack case that accommodates battery module 1. End plate 20 is composed of, for example, aluminum or iron.

Restraint members 30 are provided on both sides beside the plurality of units 10 and end plates 20 in the X direction. When restraint members 30 are engaged with end plates 20 with compressive force in the Y direction being applied to the plurality of units 10 arranged side by side and to end plates 20 and then the compressive force is released, tensile force acts on restraint members 30 that connect two end plates 20. As a reaction thereto, restraint member 30 presses two end plates 20 in directions of bringing them closer to each other. As a result, restraint members 30 restrain the plurality of units 10 in the Y direction.

Each of restraint members 30 includes a main portion 300, a first flange portion 320, and second flange portions 330. Restraint member 30 is composed of iron, for example.

Main portion 300 is a member extending in the Y direction. Main portion 300 is provided with a plurality of through holes 310. The plurality of through holes 310 are provided at intervals in the Y direction. Each of through holes 310 is constituted of a through hole extending through main portion 300 in the X direction.

First flange portion 320 extends from beside the side surfaces of the plurality of units 10 so as to be located over the upper surfaces of the plurality of units 10. By providing first flange portion 320, rigidity of restraint member 30 formed to be relatively thin can be secured.

Second flange portions 330 are connected to both ends of main portion 300 in the Y direction. Second flange portions 330 are fixed to end plates 20. Each of second flange portions 330 is fixed to end plate 20 by a known fixing method such as bolt fastening, for example. Thus, restraint members 30 connect two end plates 20 to each other.

As shown in Fig. 1, cover member 60 protects electric connection of battery module 1. Cover member 60 is located above units 10. Gas duct 70 extends in the Y direction. Gas duct 70 is disposed between each of the plurality of units 10 and cover member 60 in the Z direction.

Terminal members 80 are disposed on both sides beside the plurality of units 10 in the Y direction. Each of terminal members 80 is composed of an electric conductor. Terminal members 80 include a positive-side terminal member 80a and a negative-side terminal member 80b. Each of terminal members 80 forms a path for electric connection between battery module 1 and a driving source or the like disposed outside battery module 1.

Holders 90 are located at end portions beside units 10 in the Y direction. Each of holders 90 has an insulating property. Holder 90 is connected to end plate 20 by a known method such as bolt fastening. Terminal member 80 is fixed to holder 90 and holder 90 supports terminal member 80.

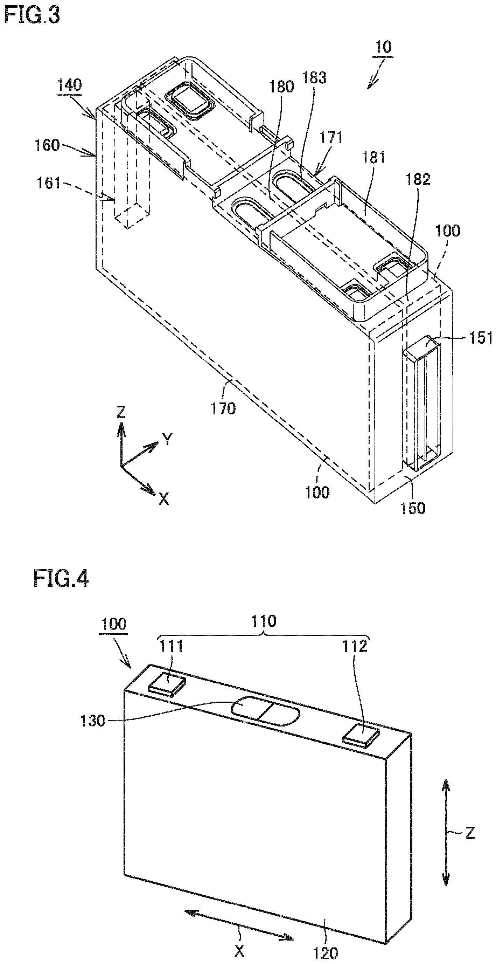

Next, a structure of each unit 10 will be described. Fig. 3 is a perspective view showing a configuration of the unit included in the battery module according to the first embodiment of the present technology.

As shown in Fig. 3, each of the plurality of units 10 includes a plurality of battery cells 100 and a case 140.

Unit 10 includes two or more battery cells 100. Unit 10 according to the present embodiment includes two battery cells 100 as an even number of battery cells 100. It should be noted that the number of battery cells 100 included in each of the plurality of units 10 is not particularly limited as long as two or more battery cells 100 are included. Moreover, an odd number of battery cells 100 may be included in each of the plurality of units 10.

The plurality of battery cells 100 are arranged side by side in one direction. Two battery cells 100 are arranged side by side in the Y direction as the plurality of battery cells 100 according to the present embodiment. The arrangement direction of the plurality of units 10 is the same as the arrangement direction of the plurality of battery cells 100 in each of the plurality of units 10. The plurality of battery cells 100 are electrically connected together by a bus bar (not shown).

Case 140 has an external appearance with a rectangular parallelepiped shape. Case 140 accommodates the plurality of battery cells 100 and supports the plurality of battery cells 100 at least in the Y direction. Case 140 is composed of, for example, a resin such as polypropylene. As shown in Figs. 1 and 2, case 140 is compressed in the Y direction by restraint members 30.

As shown in Fig. 3, case 140 has a front wall portion 150, a rear wall portion 160, a first side wall portion 170, a second side wall portion 171, and an upper surface portion 180.

Front wall portion 150 is a surface adjacent to one restraint member 30. Front wall portion 150 is provided with a first duct portion 151. First duct portion 151 protrudes from front wall portion 150 toward the one restraint member 30 side. First duct portion 151 is provided to extend through front wall portion 150 in the X direction.

Rear wall portion 160 is a surface facing front wall portion 150 with the plurality of battery cells 100 being interposed therebetween in the X direction. Rear wall portion 160 is provided with a second duct portion 161. Second duct portion 161 protrudes from rear wall portion 160 toward the other restraint member 30 side. Second duct portion 161 is provided to extend through rear wall portion 160 in the X direction. Second duct portion 161 communicates with first duct portion 151 through a cooling medium path (not shown) provided in case 140.

First side wall portion 170 and second side wall portion 171 are arranged side by side in the Y direction, and face each other.

Upper surface portion 180 includes a plurality of wall portions 181, engagement surfaces 182, and a plurality of hole portions 183. The plurality of wall portions 181 are provided to extend upward in the Z direction. The plurality of wall portions 181 define an installation location of the bus bar (not shown). First flange portion 320 of restraint member 30 is engaged with each engagement surface 182. The plurality of hole portions 183 are formed such that electrode terminals 110 and a gas-discharge valve 130, which will be described later, are exposed from upper surface portion 180.

Fig. 4 is a perspective view showing a configuration of each battery cell included in the battery module according to the first embodiment of the present technology.

As shown in Fig. 4, battery cell 100 is, for example, a lithium ion battery. Battery cell 100 has a prismatic shape. Battery cell 100 has an output density of, for example, about 8000 W/L or more. Battery cell 100 has a voltage of, for example, about 1.0 V or more.

Battery cell 100 according to the present embodiment has electrode terminals 110, a housing 120, and gas-discharge valve 130.

Electrode terminals 110 are formed on housing 120. Electrode terminals 110 have a positive electrode terminal 111 and a negative electrode terminal 112 as two electrode terminals 110 arranged side by side along the X direction.

Positive electrode terminal 111 and negative electrode terminal 112 are provided to be separated from each other in the X direction. Positive electrode terminal 111 and negative electrode terminal 112 are provided on both sides beside gas duct 70 in the X direction. Positive electrode terminal 111 and negative electrode terminal 112 are joined to the bus bar by laser welding or the like.

Housing 120 has a rectangular parallelepiped shape, and forms the external appearance of battery cell 100. An electrode assembly (not shown) and an electrolyte solution (not shown) are accommodated in housing 120.

Gas-discharge valve 130 is provided in the upper surface portion of housing 120. When internal pressure of housing 120 becomes more than or equal to a predetermined value due to gas generated inside housing 120, gas-discharge valve 130 discharges the gas to the outside of housing 120. The gas from gas-discharge valve 130 flows through gas duct 70 and is discharged to the outside of battery module 1.

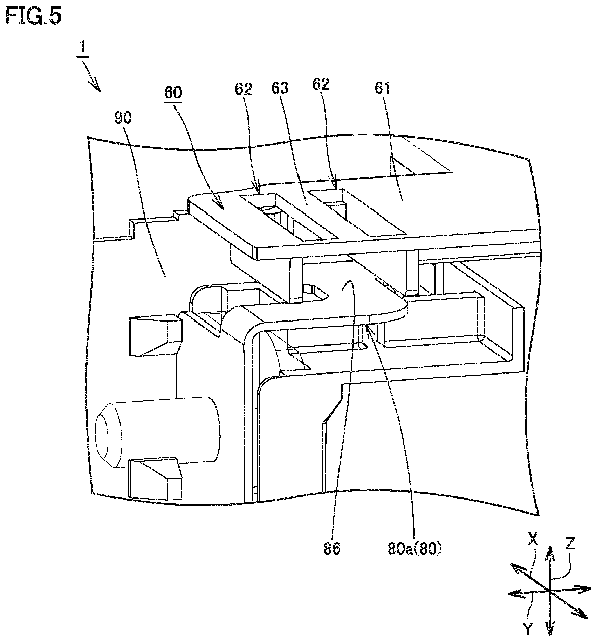

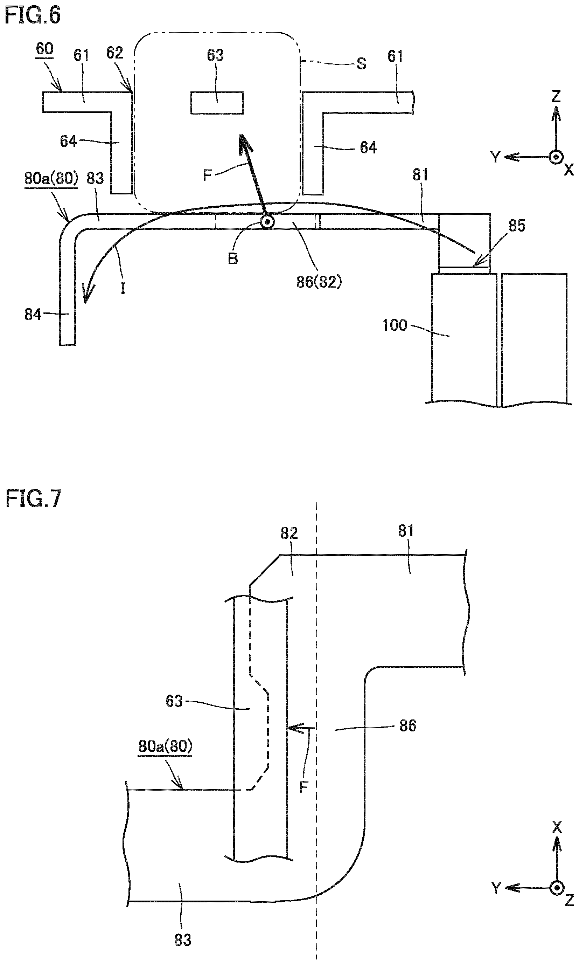

Fig. 5 is a perspective view showing a configuration around the terminal member included in the battery module according to the first embodiment of the present technology. Fig. 6 is a side view showing a Lorentz force applied around a fuse portion of the terminal member. It should be noted that positive-side terminal member 80a will be described in the following explanation for terminal member 80; however, the same structure as that of positive-side terminal member 80a can be applied to negative-side terminal member 80b except that positive-side terminal member 80a has a fuse portion 86 described later.

As shown in Figs. 5 and 6, cover member 60 includes a main surface portion 61, a beam portion 63, and a wall surface portion 64.

Main surface portion 61 extends in an XY plane. Main surface portion 61 of cover member 60 covers fuse portion 86 of terminal member 80. An opening 62 is provided in main surface portion 61.

Beam portion 63 is provided to extend across opening 62. Opening 62 and beam portion 63 are located above fuse portion 86. Thus, an arc is released to outside via opening 62, thereby facilitating extinction of the arc.

As shown in Fig. 6, a discharging space S formed at a time of melting and disconnection of fuse portion 86 is present around fuse portion 86. Discharging space S in the present embodiment is a space in which an arc can be generated and extend at the time of melting and disconnection of fuse portion 86 if no beam portion 63 is present. Opening 62 faces discharging space S.

Beam portion 63 constitutes an arc interruption portion. Beam portion 63 is located in discharging space S. Beam portion 63 is provided to extend in a direction (X direction) substantially orthogonal to a direction (Z direction) in which fuse portion 86 and discharging space S are arranged side by side. In the present embodiment, beam portion 63 is provided to extend in the X direction (direction perpendicular to a plane of sheet in Fig. 6).

Wall surface portion 64 is located between fuse portion 86 and beam portion 63 serving as the arc interruption portion in the Z direction. Wall surface portion 64 at least partially surrounds discharging space S when viewed in the direction in which fuse portion 86 and discharging space S are arranged side by side. Wall surface portion 64 according to the present embodiment surrounds both sides thereof in the Y direction. Thus, when an arc is generated, the arc is likely to be guided from fuse portion 86 to opening 62.

Terminal member 80 according to the present embodiment includes a first path 81, a second path 82, a third path 83, and a fourth path 84.

First path 81 is located above battery cell 100 and extends with first path 81 being bent in the X direction, the Y direction, and the Z direction. First path 81 has a joining portion 85.

At joining portion 85, terminal member 80 is electrically connected to electrode terminal 110 of at least one battery cell 100 of the plurality of battery cells 100. In the present embodiment, terminal member 80 is electrically connected to one battery cell 100 located at an end portion in the Y direction. It should be noted that terminal member 80 may be connected to a plurality of battery cells 100 by one joining portion.

Second path 82 is connected to first path 81 and extends in the X direction. Second path 82 includes fuse portion 86.

Fuse portion 86 is located at substantially the center of second path 82 in the X direction. Fuse portion 86 has a narrower width than those of other portions of second path 82 than fuse portion 86. When an excessive amount of current flows to terminal member 80 due to a short circuit or the like, fuse portion 86 is melted first, thereby disconnecting second path 82. As a result, the excessive amount of current is prevented from flowing into battery module 1.

Third path 83 is connected to second path 82 and extends in the Y direction. The width of third path 83 is desirably the same as the width of first path 81.

Fourth path 84 is connected to third path 83 and extends in an XZ plane. Fourth path 84 is electrically connected to an external terminal (not shown).

Next, a magnetic field and a Lorentz force generated in terminal member 80 will be described. In view of an overall shape of terminal member 80, a current I flows from first path 81 to fourth path 84 in terminal member 80. Depending on a direction of flow of current I, a magnetic field B is generated to be oriented toward one side in the X direction in accordance with the corkscrew rule. In Fig. 6, magnetic field B is generated to be oriented toward the front side in the direction perpendicular to the plane of sheet.

In response to current I and magnetic field B, a Lorentz force F oriented upward in the Z direction acts on fuse portion 86 in accordance with the Fleming's left-hand rule. Lorentz force F in the present embodiment is affected by the shape of terminal member 80 including fuse portion 86 or the like so as to be oriented upward in the Z direction and act in a direction inclined to the fourth path 84 side with respect to fuse portion 86 in the Y direction.

Generally, an arc extends in a direction in which a Lorentz force acts. Therefore, in the present embodiment, with Lorentz force F, the arc is oriented upward in the Z direction and extends in the direction inclined to the fourth path 84 side with respect to fuse portion 86 in the Y direction. Thus, discharging space S is formed on a side opposite to the plurality of battery cells 100 with respect to terminal member 80.

Fig. 7 is a top view showing a positional relation between the fuse portion and the beam portion. As shown in Fig. 7, beam portion 63 extends in a direction in which an electric conduction path including fuse portion 86 in terminal member 80 extends. In the present embodiment, beam portion 63 extends in the X direction in which second path 82 extends.

When viewed in the direction in which fuse portion 86 and discharging space S are arranged side by side, beam portion 63 serving as the arc interruption portion is disposed at a position displaced with respect to the center of fuse portion 86 in the direction of Lorentz force F acting on arc A. Specifically, beam portion 63 is disposed at a position displaced to one side in the Y direction. Thus, beam portion 63 is disposed in a direction in which arc A extends when arc A receives Lorentz force F.

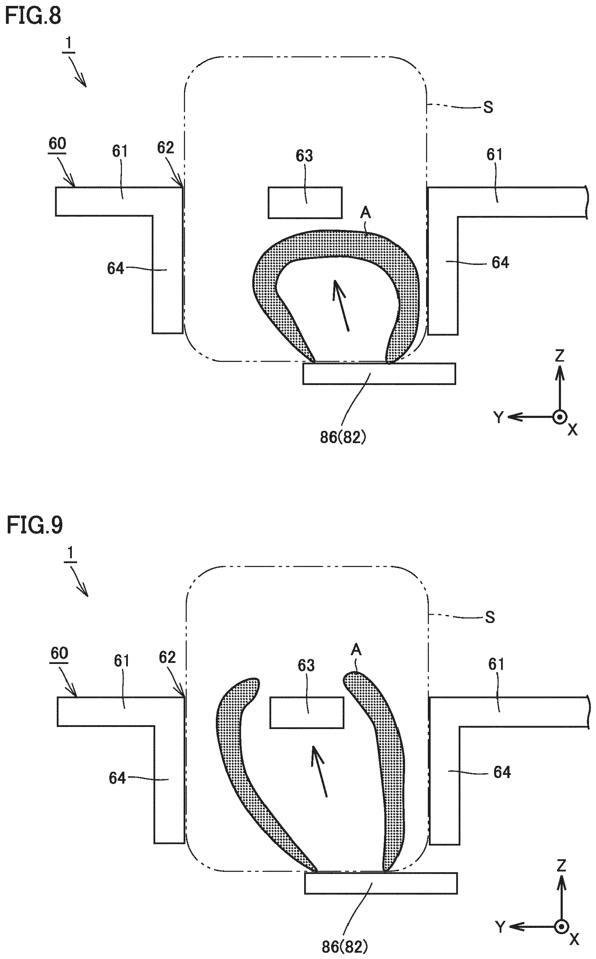

Fig. 8 is a side view showing a state of the arc when the arc is generated in the fuse portion. As shown in Fig. 8, when fuse portion 86 is melted and disconnected by flow of an excessive amount of current therein, arc A may be generated between one side and the other side of second path 82 with fuse portion 86 being interposed therebetween. Arc A is affected by Lorentz force F to extend upward in the Z direction and in the direction inclined to the fourth path 84 side with respect to fuse portion 86 in the Y direction. It should be noted that the arc may extend along a YZ plane, may extend along the XZ plane, or may extend in a direction inclined with respect to the YZ plane or the XZ plane.

Fig. 9 is a side view showing a state in which the arc is interrupted by the beam portion. As shown in Fig. 9, arc A having extended is brought into contact with beam portion 63. When arc A is brought into contact with beam portion 63, continuous arc A is interrupted by beam portion 63 and is accordingly divided into two. Arc A is extinguished. Electric conduction is interrupted between the one side and the other side of the second path between which fuse portion 86 is interposed.

In battery module 1 according to the first embodiment of the present technology, since beam portion 63 serving as the arc interruption portion is disposed in discharging space S, arc A extending in discharging space S can be interrupted by beam portion 63. Thus, arc A can be extinguished, thereby shorting a time of electric conduction of an excessive amount of current in battery module 1.

In battery module 1 according to the first embodiment of the present technology, fuse portion 86 is protected by cover member 60, and arc A can be released to the outside via opening 62 provided in cover member 60, thereby facilitating extinction of the arc.

In battery module 1 according to the first embodiment of the present technology, since wall surface portion 64 is provided in cover member 60, arc A can be likely to be guided to discharging space S.

In battery module 1 according to the first embodiment of the present technology, since the arc interruption portion can be constituted of beam portion 63 provided in cover member 60, the arc interruption portion can be provided without increasing the number of components.

In battery module 1 according to the first embodiment of the present technology, since beam portion 63 is disposed in parallel with second path 82 serving as the electric conduction path including fuse portion 86 in terminal member 80, generated arc A is likely to be brought into contact with beam portion 63.

In battery module 1 according to the first embodiment of the present technology, arc A extends to the side opposite to battery cell 100, thereby avoiding arc A from being brought into contact with battery cell 100. As a result, arc A can be released to the outside, thereby facilitating extinction of the arc.

In battery module 1 according to the first embodiment of the present technology, arc A can be caused to extend along the direction of Lorentz force F generated by the electric conduction in terminal member 80, and can be interrupted by beam portion 63 provided in the direction in which arc A extends.

Hereinafter, battery modules according to second and third embodiments of the present technology will be described. Since each of the battery modules according to the second and third embodiments of the present technology is different from battery module 1 according to the first embodiment of the present technology in terms of the configuration of the beam portion serving as the arc interruption portion, the same configurations as those of battery module 1 according to the first embodiment of the present technology will not be described repeatedly.

### (Second Embodiment)

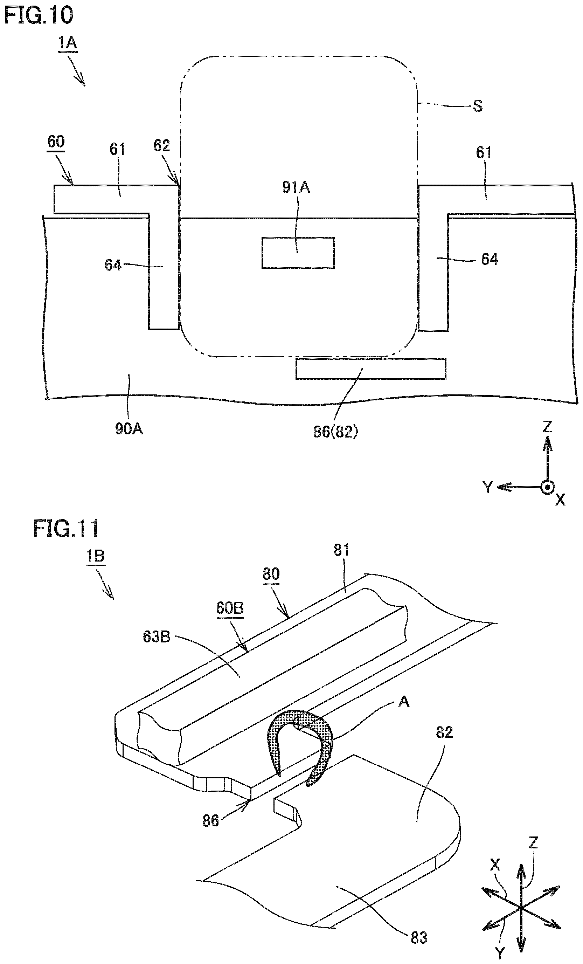

Fig. 10 is a side view showing a configuration around a terminal member included in the battery module according to the second embodiment of the present technology.

As shown in Fig. 10, a holder 90A included in a battery module 1A of the present embodiment includes a beam portion 91A that constitutes the arc interruption portion. Beam portion 91A is provided along a direction along second path 82. Beam portion 91A according to the present embodiment is disposed on the fuse portion 86 side with respect to the edge of the upper surface of main surface portion 61 at opening 62.

In battery module 1A according to the second embodiment of the present technology, since beam portion 91A is provided in holder 90A, a distance of beam portion 91A to fuse portion 86 can be smaller than that in the case where the beam portion is provided at the edge of the upper surface of main surface portion 61 at opening 62, with the result that beam portion 91A can be likely to be brought into contact with the arc. As a result, the arc can be likely to be interrupted by beam portion 91A, thereby extinguishing the arc.

In battery module 1A according to the second embodiment of the present technology, since the arc interruption portion can be constituted of beam portion 91A provided in holder 90A, beam portion 91A can be provided without increasing the number of components.

### (Third Embodiment)

Fig. 11 is a perspective view showing a configuration around a terminal member included in the battery module according to the third embodiment of the present technology.

As shown in Fig. 11, a beam portion 63B included in a battery module 1B of the present embodiment extends in the direction (Y direction) substantially orthogonal to the direction (X direction) in which the electric conduction path including fuse portion 86 in terminal member 80 extends. In the present embodiment, beam portion 63B extends in the Y direction orthogonal to the X direction in which second path 82 extends.

In battery module 1B according to the third embodiment of the present technology, when arc A extends along the XZ plane, arc A can be likely to be interrupted by beam portion 63B because beam portion 63B can be disposed in the direction (Y direction) substantially orthogonal to the extension of arc A.

It should be noted that in each of the above-described embodiments, the beam portion is formed in one piece with the cover member or the holder; however, it is not limited to this configuration. The beam portion may be provided as a separate member and may be attached to the cover member or the holder.

Although the embodiments of the present invention have been described and illustrated in detail, it is clearly understood that the same is by way of illustration and example only and is not to be taken by way of limitation, the scope of the present invention being interpreted by the terms of the appended claims. The scope of the present invention is defined by the terms of the claims, and is intended to include any modifications within the scope and meaning equivalent to the terms of the claims.

## Claims

1. A battery module comprising:
a plurality of battery cells (100) arranged side by side in one direction, each of the plurality of battery cells (100) having a prismatic shape;
a terminal member (80) electrically connected to at least one battery cell (100) of the plurality of battery cells (100), the terminal member (80) including a fuse portion (86); and
an arc interruption portion (63) located in a discharging space (S) in which an arc (A) generated at a time of melting and disconnection of the fuse portion (86) extends, the arc interruption portion (63) being provided to extend in a direction substantially orthogonal to a direction in which the fuse portion (86) and the discharging space (S) are arranged side by side.

2. The battery module according to claim 1, further comprising a cover member (60) that covers the fuse portion (86), wherein
the cover member (60) is provided with an opening (62) that faces the discharging space (S).

3. The battery module according to claim 2, further comprising a wall surface portion (64) located between the fuse portion (86) and the arc interruption portion (63), wherein
the wall surface portion (64) at least partially surrounds the discharging space (S) when viewed in the direction in which the fuse portion (86) and the discharging space (S) are arranged side by side.

4. The battery module according to claim 2 or 3, wherein the cover member (60) includes a beam portion (63) provided to extend across the opening (62), the beam portion (63) constituting the arc interruption portion.

5. The battery module according to any one of claims 1 to 3, further comprising a holder (90A) that supports the terminal member (80), wherein
the holder (90A) includes a beam portion (91A) that constitutes the arc interruption portion.

6. The battery module according to claim 4, wherein the beam portion (63) extends in a direction in which an electric conduction path including the fuse portion (86) in the terminal member (80) extends.

7. The battery module according to claim 4, wherein the beam portion (63B) extends in a direction substantially orthogonal to a direction in which an electric conduction path including the fuse portion (86) in the terminal member (80) extends.

8. The battery module according to claim 1 or 2, wherein the discharging space (S) is formed on a side opposite to the plurality of battery cells (100) with respect to the terminal member (80).

9. The battery module according to claim 8, wherein the arc interruption portion (63) is disposed at a position displaced with respect to a center of the fuse portion (86) when viewed in the direction in which the fuse portion (86) and the discharging space (S) are arranged side by side.
